# EUROPEAN PATENT APPLICATION

(11) **EP 4 411 356 A1**
(43) Date of publication of application: **07.08.2024**
(21) Application number: 22875603.7
(22) Date of filing: 09.08.2022
(51) Int. Cl.: G01N 23/18, G01N 21/88, G01N 23/04, G06T 7/00, G06T 7/11, G06T 7/60

(54) **DISPLAY PROCESSING DEVICE, DISPLAY PROCESSING METHOD, AND DISPLAY PROCESSING PROGRAM**

(30) Priority: 29.09.2021 JP 2021159740
(71) Applicant: FUJIFILM Corporation, Tokyo 106-8620 (JP)
(72) Inventor: IKEDA, Haruka, Tokyo 106-8620 (JP)
(74) Representative: Parker, Andrew James
(86) International application number: PCT/JP2022/030414
(87) International publication number: WO 2023/053728

(57) **Abstract**

There are provided a display processing device, a display processing method, and a display processing program that make it easy to confirm a relevance between a plurality of detection target regions in image display. A display processing device includes: an acquisition unit that discriminates a detection target and other targets of an object for each pixel of a captured image obtained by imaging the object based on the captured image, and acquires a segmentation result; an extraction unit that extracts a region of the detection target from the segmentation result; a measurement unit that measures a feature amount for determining a relevance between a plurality of regions of the detection targets in a case where a plurality of non-continuous regions of the detection targets are extracted; a relevance determination unit that determines the relevance between the plurality of regions of the detection targets based on the feature amount; a region decision unit that decides a target region to be displayed in an integrated display format among the plurality of regions of the detection targets based on an evaluation result determined by the relevance determination unit; and a drawing unit that draws the target region in the display format.

## Description

### BACKGROUND OF THE INVENTION

### 1. Field of the Invention

The present invention relates to a display processing device, a display processing method, and a display processing program, and particularly relates to a display processing device, a display processing method, and a display processing program that display a detection target by using a segmentation image determined by using segmentation.

### 2. Description of the Related Art

As a method of inspecting a defect of an industrial product to be inspected, there is a non-destructive inspection including irradiation of the industrial product with a ray or radiation. In the non-destructive inspection, an image obtained by irradiating the industrial product to be inspected with a ray or radiation is subjected to so-called segmentation which determines a defect or a non-defect for each pixel and divides the image into different regions.

In this case, in order to present a result to an inspector, a defect region is displayed by filling with a color that corresponds to a defect type in advance, in a region determined to be the defect, that is, a location where the defect is detected. Meanwhile, there is a problem in that a file capacity is increased in a case where an entirety of coordinate information is stored and transmitted to a display viewer used at an inspection site for filling in.

As a method of displaying defects, for example, JP2008-241298A discloses a defect detection method that properly combines the defects and uses a minimum rectangle that covers an entire circumscribed rectangle for all the detected defects after the combination.

### SUMMARY OF THE INVENTION

As a method of displaying a result of the segmentation, for continuous regions detected by the segmentation, a rectangle (bounding box) having a fixed size and having centroid coordinates as a center is defined, and each defect region is surrounded by one rectangle.

However, in a case where the detection result of the segmentation is divided into a plurality of regions, and all the regions are individually captured and surrounded by the rectangle, the display becomes too large and takes time to confirm. Therefore, there is a problem in that an efficiency of the inspection is deteriorated.

The present invention has been made in view of such circumstances, and an object of the present invention is to provide a display processing device, a display processing method, and a display processing program that make it easy to confirm a relevance between a plurality of regions of detection targets in image display.

In order to achieve the object of the present invention, a display processing device according to an aspect of the present invention comprises: an acquisition unit that discriminates a detection target and other targets of an object for each pixel of a captured image obtained by imaging the object based on the captured image, and acquires a segmentation result; an extraction unit that extracts a region of the detection target from the segmentation result; a measurement unit that measures a feature amount for determining a relevance between a plurality of regions of the detection targets in a case where a plurality of non-continuous regions of the detection targets are extracted; a relevance determination unit that determines the relevance between the plurality of regions of the detection targets based on the feature amount; a region decision unit that decides a target region to be displayed in an integrated display format among the plurality of regions of the detection targets based on an evaluation result determined by the relevance determination unit; and a drawing unit that draws the target region in the display format.

According to an aspect of the present invention, it is preferable to further comprise a display control unit that passes information necessary for displaying the target region to a display unit to display the target region.

According to the aspect of the present invention, it is preferable that the captured image is a transmission image captured by transmitting radiation through the object.

According to the aspect of the present invention, it is preferable that the display format is at least one of a frame surrounding the target region, highlight display between the target region and other regions, or a mark indicating the target region.

According to the aspect of the present invention, it is preferable that the detection target is a defect.

According to the aspect of the present invention, it is preferable that the relevance determination unit determines a relevance for regions of detection targets having the same type of defects.

According to the aspect of the present invention, it is preferable that the feature amount is a distance between the regions of the detection targets.

According to the aspect of the present invention, it is preferable that the relevance determination unit has a threshold value of the distance determined from characteristics of the object, a past detection history, a pass/fail criterion of the detection target, and a type of the detection target, and determines the relevance from the threshold value and the feature amount measured by the measurement unit.

According to the aspect of the present invention, it is preferable that the feature amount is positional information of the detection target.

According to the aspect of the present invention, it is preferable that the feature amount is a regularity of the region of the detection target.

According to the aspect of the present invention, it is preferable that the region decision unit decides the target region and a sub-target region in the target region, which has a different occurrence density distribution of the detection target from other regions inside the target region, and the drawing unit draws the target region in a first display format and draws the sub-target region in a second display format.

According to the aspect of the present invention, it is preferable that the target region includes defects of different types, and the drawing unit adds information indicating that the defects of different types are included in the target region.

According to the aspect of the present invention, it is preferable that the information is given by at least one of a display color, a line type, or a mark of a frame surrounding the target region.

In order to achieve the object of the present invention, a display processing method according to another aspect of the present invention comprises: an acquisition step of discriminating a detection target and other targets of an object for each pixel of a captured image obtained by imaging the object based on the captured image, and acquiring a segmentation result; an extraction step of extracting a region of the detection target from the segmentation result; a measurement step of measuring a feature amount for determining a relevance between a plurality of regions of the detection targets in a case where a plurality of non-continuous regions of the detection targets are extracted; a relevance determination step of determining the relevance between the plurality of regions of the detection targets based on the feature amount; a region decision step of deciding a target region to be displayed in an integrated display format among the plurality of regions of the detection targets based on an evaluation result determined in the relevance determination step; and a drawing step of drawing the target region in the display format.

In order to achieve the object of the present invention, a display processing method according to a still another aspect of the present invention comprises: an acquisition step of acquiring information on a region of a detection target included in a segmentation result in which a detection target for each pixel of an object and other targets are discriminated from each other; a measurement step of measuring a feature amount for determining a relevance between a plurality of regions of the detection targets in a case where there are a plurality of non-continuous regions of the detection targets; a relevance determination step of determining the relevance between the plurality of regions of the detection targets based on the feature amount; and a region decision step of deciding a target region to be displayed in an integrated display format among the plurality of regions of the detection targets based on an evaluation result determined in the relevance determination step.

In order to achieve the object of the present invention, a display processing program according to a still another aspect of the present invention causes a computer to implement: an acquisition function of discriminating a detection target and other targets of an object for each pixel of a captured image obtained by imaging the object based on the captured image, and acquiring a segmentation result; an extraction function of extracting a region of the detection target from the segmentation result; a measurement function of measuring a feature amount for determining a relevance between a plurality of regions of the detection targets in a case where a plurality of non-continuous regions of the detection targets are extracted; a relevance determination function of determining the relevance between the plurality of regions of the detection targets based on the feature amount; a region decision function of deciding a target region to be displayed in an integrated display format among the plurality of regions of the detection targets based on an evaluation result determined by the relevance determination function; and a drawing function of drawing the target region in the display format.

According to the present invention, it is possible to easily confirm a relevance between a plurality of regions of detection targets.

### BRIEF DESCRIPTION OF THE DRAWINGS

Fig. 1 is a block diagram showing a defect display processing defect display processing device according to an embodiment of the present invention.
Fig. 2 is a block diagram showing an example of an image processing unit 24.
Fig. 3 is a block diagram showing an example of object imaging data.
Fig. 4 is a block diagram showing an example of product data.
Fig. 5 is a block diagram showing an example of an imaging system.
Fig. 6 is a flowchart showing a defect display processing method according to the embodiment of the present invention.
Figs. 7A and 7B are diagrams showing an example of display processing according to the embodiment of the present invention.
Figs. 8A and 8B are diagrams showing another example of the display processing according to the embodiment of the present invention.
Fig. 9 is a diagram showing still another example of the display processing according to the embodiment of the present invention.
Fig. 10 is a diagram showing still another example of the display processing according to the embodiment of the present invention.
Figs. 11A to 11C are diagrams showing still another example of the display processing according to the embodiment of the present invention.

### DESCRIPTION OF THE PREFERRED EMBODIMENTS

Hereinafter, a display processing device, a display processing method, and a display processing program according to an embodiment of the present invention will be described with reference to the accompanying drawings. In the following, as an embodiment of the present invention, a defect display processing device, a defect display processing method, and a defect display processing program in which a detection target is a defect will be described.

### [Configuration of Display Device]

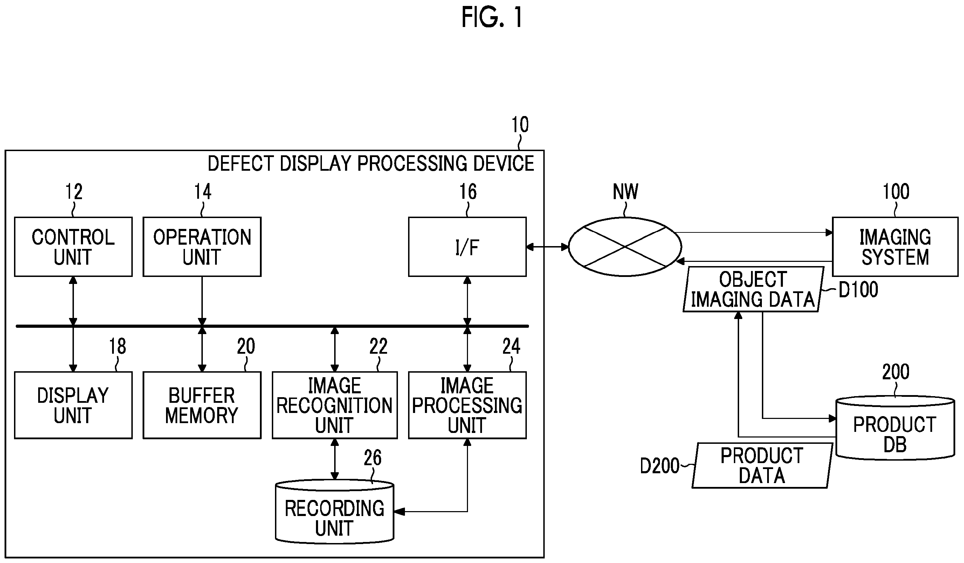

Fig. 1 is a block diagram showing a defect display processing device (display processing device) 10 according to an embodiment of the present invention.

The defect display processing device 10 according to the present embodiment is a device that performs display processing of a defect from a captured image obtained by imaging an industrial product of an object, and is a device that supports a diagnosis of the defect of the object by an inspector. As shown in Fig. 1, the defect display processing device 10 according to the present embodiment comprises a control unit 12, an operation unit 14, an input/output interface (hereinafter, referred to as an I/F) 16, a display unit 18, a buffer memory 20, an image recognition unit 22, an image processing unit 24, and a recording unit 26.

The control unit 12 includes a central processing unit (CPU) that controls an operation of each unit of the defect display processing device 10. The control unit 12 receives an operation input from an inspector via the operation unit 14 and transmits control signals according to the operation input to each unit of the defect display processing device 10 to control the operation of each unit.

The operation unit 14 is an input device that receives the operation input from the inspector, and includes a keyboard for inputting characters and a pointing device (a mouse, a trackball, or the like) for operating a pointer, an icon, and the like displayed on the display unit 18. In addition, a touch panel may be provided on a surface of the display unit 18 as the operation unit 14, instead of the means listed above or in addition to the means listed above.

The I/F 16 is means for performing communication with an external device via a network NW. As a method of transmitting and receiving data between the defect display processing device 10 and the external device, wired communication (for example, local area network (LAN), wide area network (WAN), Internet connection, or the like) or wireless communication (for example, LAN, WAN, internet connection, or the like) can be used.

The defect display processing device 10 can receive the input of object imaging data D100 including captured image data of an object OBJ captured by an imaging system 100 via the I/F 16. A method of inputting the object imaging data D 100 to the defect display processing device 10 from the imaging system 100 is not limited to the communication via the network NW listed above. For example, the defect display processing device 10 and the imaging system 100 may be connected to each other by a universal serial bus (USB) cable, Bluetooth (registered trademark), infrared communication, or the like. The object imaging data D100 may be stored in a memory card attachable to and detachable from the defect display processing device 10 and readable by the defect display processing device 10, and the captured image data may be input to the defect display processing device 10 via the memory card.

Further, the defect display processing device 10 can communicate with a product database (product DB) 200 via the network NW. In the product DB200, product data D200 for each industrial product of the object is stored. The control unit 12 can search for and read out object specifying information for specifying the object from the captured image data of the object OBJ acquired from the imaging system 100, and acquire the product data D200 corresponding to the read-out object specifying information from the product DB 200. By using the product data D200, it is possible to detect the defect according to a type or a feature of the object OBJ.

The product DB200 may be installed on the network NW as in the present embodiment so that the manufacturer or the like may be able to update the product data D200, or the product DB200 may be provided in the defect display processing device 10.

The display unit (display means) 18 is a device for displaying a captured image and a segmentation image (segmentation result). As the display unit 18, for example, a liquid crystal monitor can be used.

The buffer memory 20 is used as a region for temporarily storing a work region of the control unit 12 and image data to be output to the display unit 18.

The recording unit 26 is means for storing data including a control program used by the control unit 12. As the recording unit 26, for example, a device including a magnetic disk such as a hard disk drive (HDD), a device including a flash memory such as an embedded multi media card (eMMC) or a solid state drive (SSD), or the like can be used. The object imaging data D100 and the product data D200 are stored in the recording unit 26.

The image recognition unit 22 (acquisition unit) specifies a type of an object in the captured image by using a defect type specifying model. The defect type specifying model is a model that uses an object image as input data and uses the segmentation image (segmentation result) that is a result of specifying the type of defect as output data. The obtained segmentation image is stored in the recording unit 26.

The segmentation image is an image in which a type of defect (for example, a foreign matter, a crack, a scratch, a bubble inclusion, a gas defect, a wear, rust, and a welding defect (excess weld metal, poor penetration, spatter, and undercut), and the like) in the image of the object is discriminated in units of pixels as shown in different colors to be distinguished. A method of discriminating the kind of the defect in the image in units of pixels is referred to as semantic segmentation. Examples of a machine learning model that performs the segmentation include a U-shaped convolutional neural network (U-Net).

The image processing unit 24 reads out the segmentation image from the image recognition unit 22 or the recording unit 26 and extracts a defect region (a region of the detection target). Then, a feature amount for determining a relevance between the extracted defect regions is measured, and a relevance between the defect regions is determined based on the feature amount. Further, a target region to be displayed in an integrated display format is decided based on an evaluation result in which the relevance is determined, and a display format indicating the target region is drawn. The image processing unit 24 outputs these results and information to the buffer memory 20. The control unit 12 creates a display image in which a plurality of defect regions are displayed on the segmentation image in an integrated display format by using data output to the buffer memory 20, and displays the display image on the display unit 18. As a result, the inspector can perform the inspection of the object OBJ by interpreting the image displayed on the display unit 18.

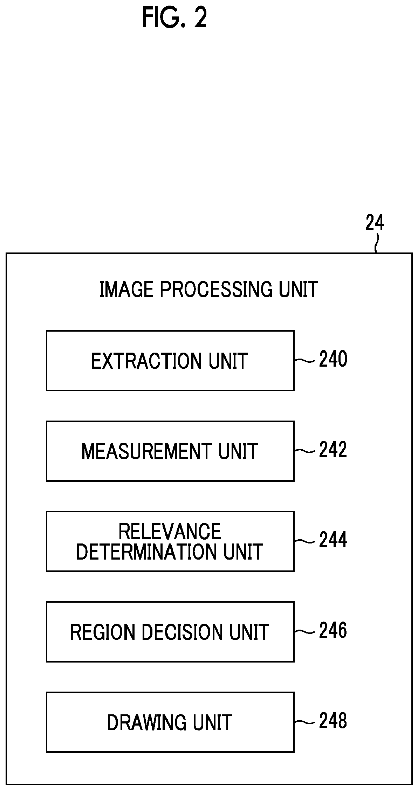

Fig. 2 is a block diagram showing an example of the image processing unit 24. As shown in Fig. 2, the image processing unit 24 comprises an extraction unit 240, a measurement unit 242, a relevance determination unit 244, a region decision unit 246, and a drawing unit 248.

The extraction unit 240 extracts the defect of the object OBJ by detecting different colors from the segmentation image. As a result, a position and a shape of the defect are specified.

In a case where the extraction unit 240 extracts a plurality of discontinuous defect regions, the measurement unit 242 measures the feature amount for determining the relevance between the defect regions. Examples of the feature amount include a distance (pixel) between the defect regions for which the relevance is determined, positional information between the defect regions, and regularity of a distribution of the defect regions.

As the distance between the defect regions, a distance between centers of the defect regions, a distance between centroids of the defect regions, a shortest distance between end parts of the defect regions, or the like is measured. The center of the defect region refers to a center of a circle or an ellipse circumscribing the defect region. The positional information between the defects is the presence or absence of a step (edge) in brightness between the defect regions or a difference in texture around the defect regions. The regularity of the distribution of the defect regions includes that two or more defect regions are distributed at equal intervals, a directionality of the defect regions is linear or curved, and the like.

The relevance determination unit 244 determines the relevance between the defect regions based on the feature amount. In a case where the relevance determination unit 244 determines the relevance by a distance between the defect regions, the relevance determination unit 244 holds a threshold value of the distance determined from characteristics of the object, a past detection history, a pass/fail criterion of the defect, a type of the defect, and the like, and determines the presence or absence of the relevance from the threshold value and a result of the measured distance between the defect regions. In addition, in a case where a step of brightness is observed between the defects and in a case where a difference in texture is observed, the defect regions are determined to have no relevance. In addition, in a case where the shape of the object is known, such as a three-dimensional model, and it is determined that a plurality of layers of a component overlap each other in a depth direction in the vicinity of the defect, from a correspondence with positional information of the defect of the segmentation image, the defect regions are determined to have no relevance. Further, in the regularity of the distribution of the defect regions, in a case where two or more defect regions are distributed at equal intervals and in a case where a directionality of the defect regions is linear or curved, the defect regions are determined to have a relevance. Further, shape information of the defect region, for example, the directionality considering an aspect ratio may be taken into consideration. In a case where two elliptical defects are along a major axis direction, the two elliptical defects can be determined to be a set of linear defects having a relevance. Meanwhile, in a case where two defects face each other in minor axes thereof, the two defects can be determined to be separate defects having no relevance.

The region decision unit 246 decides a target region for displaying a plurality of defect regions in an integrated display format, based on the evaluation result determined by the relevance determination unit 244. The defect regions having the same type of defect and determined to have a relevance by the relevance determination unit 244 are decided as a target region to be displayed in an integrated display format. In addition, in a case where the defects are of different types, and each of the defects is displayed in a single display format, the display may overlap and it may be difficult to confirm the defect region on the display unit 18. In this case, the target region in which defects of different types are displayed in an integrated display format is decided.

The drawing unit 248 draws the target region decided by the region decision unit 246 in an integrated display format. Examples of the integrated display format include surrounding the target region with a frame, changing the brightness of the target region and a region other than the target region to perform highlight display, and displaying the target region with a mark such as an arrow.

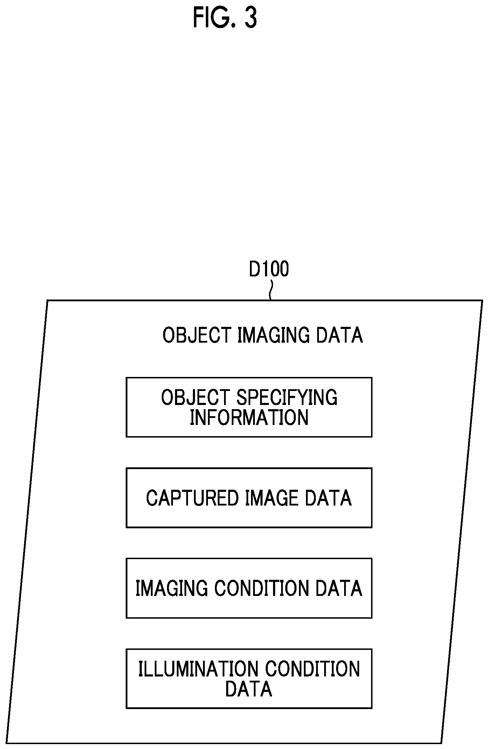

Fig. 3 is a block diagram showing an example of the object imaging data. As shown in Fig. 3, the object imaging data D100 includes object specifying information, captured image data, imaging condition data, and illumination condition data.

The object specifying information is information for specifying the object OBJ, and includes, for example, information indicating a product name, a product number, identification (ID) information, a manufacturer name, and a technical classification of the object OBJ.

The captured image data is image data (for example, an X-ray transmission image or a visible light image) obtained by imaging the object OBJ, and includes information about an image resolution or resolving power.

The imaging condition data is stored for each captured image data of the object OBJ, and includes information indicating an imaging date and time, an imaging target location, a distance between the object OBJ and the imaging apparatus during imaging, and an angle with respect to the imaging apparatus for each captured image data.

The illumination condition data includes information indicating a type of radiation used for imaging the object OBJ (for example, X-rays, visible rays, transmission rays, or reflection rays), an irradiation intensity, an irradiation angle, and parameters of a tube current and a tube voltage.

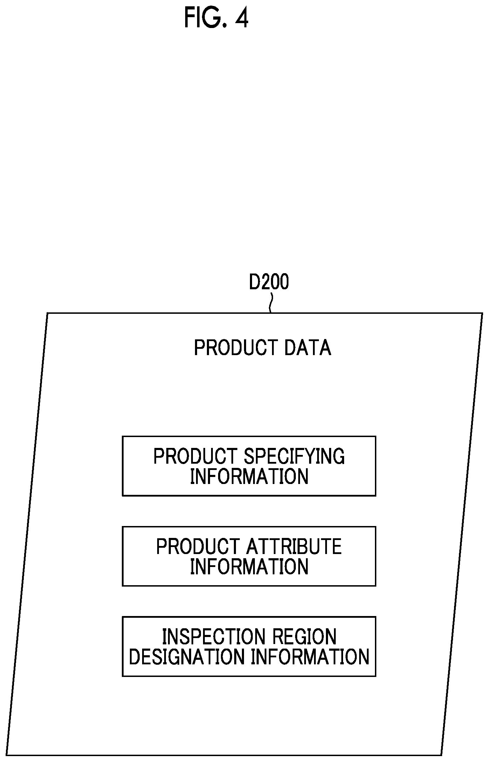

Fig. 4 is a block diagram showing an example of product data. As shown in Fig. 4, the product data D200 includes product specifying information, product attribute information, and inspection region designation information. The product data D200 may be recorded in the recording unit 26 in association with the object imaging data D100 via the object specifying information and the product specifying information, or may be acquired from the product DB 200 each time the defect is inspected.

The product specifying information is information for specifying the product, and includes, for example, information indicating a product name, a product number, a manufacturer name, and a technical classification.

The product attribute information includes, for example, information indicating a material and a dimension of each part of the product, and an application of the product. The information indicating the application of the product includes, for example, information on a name, a type, a processing state, and an attachment method (for example, joints, welds, screwing, fitting, and soldering) of a device to which the product is attached, or the like. In addition, the product attribute information includes defect occurrence information. The defect occurrence information includes, for example, information of at least one of past inspection date and time, a material of the object OBJ, a type (for example, a foreign matter, a crack, a scratch, a bubble inclusion, a welding gas defect, a wear, rust, or the like), positional information, a shape, a size, a depth, an occurrence part (part coordinates, a material thickness, a processing state (for example, joints, welds, or the like)) of the defect that has occurred in the past, frequency information related to a defect occurrence frequency, or the captured image of the defect.

The inspection region designation information includes information indicating an inspection region designated by a manufacturer or the like of each product (for example, information including a position of the inspection region and created based on defect occurrence information such as the presence or absence of defect occurrence in the past and frequency information related to a defect occurrence frequency). The inspection region designation information is created, for example, by specifying a location where the defect is likely to occur statistically and structurally based on information in a case where a manufacturer or the like has repaired the product in the past.

The defect occurrence information includes, for example, information of at least one of past inspection date and time, a material of the object OBJ, a type, a shape, a size, a depth of the d, and an occurrence part of the defect that has occurred in the past, or a captured image of the defect.

### [Configuration of Imaging System]

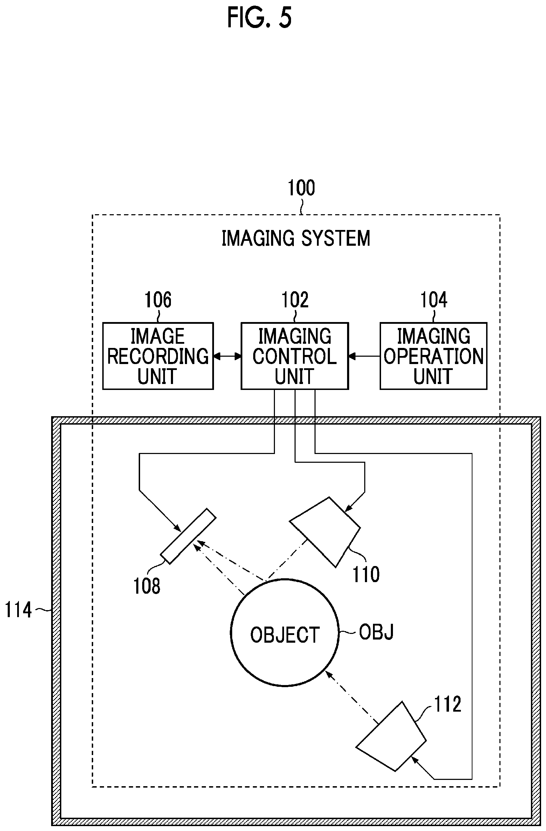

Next, the imaging system 100 for capturing an image of the object OBJ will be described. Fig. 5 is a block diagram showing an example of the imaging system.

The imaging system 100 is used for imaging the object OBJ placed in an imaging room 114, and comprises an imaging control unit 102, an imaging operation unit 104, an image recording unit 106, an imaging apparatus 108, and radiation sources 110 and 112 as shown in Fig. 5.

The imaging control unit 102 includes a central processing unit (CPU) that controls an operation of each unit of the imaging system 100. The imaging control unit 102 receives an operation input from an operator (photographer) via the imaging operation unit 104 and transmits a control signal corresponding to the operation input to each unit of the imaging system 100 to control the operation of each unit.

The imaging operation unit 104 is an input device that receives the operation input from the operator, and includes a keyboard for inputting characters and a pointing device (a mouse, a trackball, or the like) for operating a pointer, an icon, and the like displayed on the display unit 18. The operator can perform, through the imaging operation unit 104, an input of information regarding the object OBJ, an input of an instruction to execute imaging to the imaging apparatus 108 (including settings for imaging conditions such as an exposure time, a focal length, and a stop, an imaging angle, an imaging location, and the like), an input of an instruction of radiation irradiation to the radiation sources 110 and 112 (including settings for an irradiation start time, an irradiation duration, an irradiation angle, an irradiation intensity, and the like), and an input of an instruction to record the acquired image data in the image recording unit 106.

The image recording unit 106 records the image data (light-receiving image) of the object OBJ, which is imaged by the imaging apparatus 108. The image recording unit 106 records information for specifying the object OBJ in association with the image data.

The imaging apparatus 108 and the radiation sources 110 and 112 are disposed in the imaging room 114. The radiation sources 110 and 112 are, for example, X-ray sources, and a partition wall between the imaging room 114 and the outside and an entrance are protected from X-rays by X-ray protection materials (for example, lead, concrete, or the like). In a case where the object OBJ is irradiated with visible light for imaging, it is not necessary to use the imaging room 114 with protection.

The radiation sources 110 and 112 irradiate the object OBJ placed in the imaging room 114 with radiation in response to an instruction from the imaging control unit 102.

The imaging apparatus 108 receives the radiation emitted from the radiation source 110 to the object OBJ and reflected from the object OBJ, or the radiation emitted from the radiation source 112 to the object OBJ and transmitted through the object OBJ and images the object OBJ according to an instruction to execute imaging from the imaging control unit 102. As the imaging apparatus 108, a light-receiving panel can be used in a case where the object OJT is irradiated using the X-ray source, and a camera can be used in a case where the object OJT is irradiated with visible light. The object OBJ is held in the imaging room 114 by a holding member (for example, a manipulator, a mounting table, or a movable mounting table) which is not shown, and a distance and an angle of the object OBJ with respect to the imaging apparatus 108 and the radiation sources 110 and 112 are adjusted. The operator can control relative positions between the object OBJ, the imaging apparatus 108, and the radiation sources 110 and 112 via the imaging control unit 102, and can image a desired location of the object OBJ.

The radiation sources 110 and 112 end the irradiation of the object OBJ with the radiation in synchronization with the end of execution of the imaging by the imaging apparatus 108.

In an example shown in Fig. 5, the imaging apparatus 108 is disposed inside the imaging room 114, but the imaging apparatus 108 may be disposed outside the imaging room 114 as long as it can image the object OBJ in the imaging room 114.

In addition, in the example shown in Fig. 5, one imaging apparatus 108 and two radiation sources 110 and 112 are provided, but the number of the imaging apparatus and the radiation sources is not limited thereto. For example, a plurality of imaging apparatuses and a plurality of radiation sources may be provided, or one imaging apparatus and one radiation source may be provided.

### [Defect Display Processing Method]

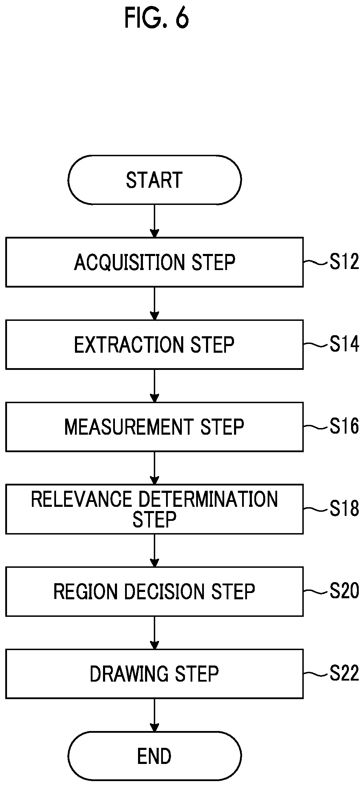

Fig. 6 is a flowchart showing a defect display processing method according to the embodiment of the present invention.

First, the defect display processing device 10 acquires the object imaging data D100 including the captured image data (captured image) of the object OBJ from the imaging system 100 via the I/F 16. The image recognition unit 22 acquires a segmentation image (segmentation result) that is a result of specifying the type of the defect from the acquired captured image data by using the defect type specifying model (step S12: acquisition step).

Next, the extraction unit 240 of the image processing unit 24 extracts the defect region from the segmentation image (step S14: extraction step). In the segmentation image, defects of different types are shown by being distinguished with different colors, and the defect regions are extracted by detecting the different colors.

Next, the measurement unit 242 of the image processing unit 24 measures the feature amount for determining the relevance between the defect regions extracted in the extraction step (step S14) (step S16: measurement step). As the feature amount to be measured, a distance (pixel) between the defect regions for which the relevance is determined is measured. As the distance between the defect regions, a distance between centers of the defect regions, a distance between centroids of the defect regions, a shortest distance between end parts of the defect regions, or the like is measured.

Next, the relevance determination unit 244 of the image processing unit 24 determines the relevance between the defect regions based on the feature amount (distance between the defect regions) measured in the measurement step (step S16) (step S 18: relevance determination step). The relevance determination unit 244 holds a threshold value of a distance determined from characteristics of the object, a past detection history, a pass/fail criterion of the defect, and the like. The characteristics of the object, the past detection history, the pass/fail criterion of the defect, and the like can be acquired from the object specifying information of the object imaging data D 100 and the product attribute information of the product data D200.

In addition, the threshold value as a reference can be determined according to the type of defect. For example, in consideration of the fact that the defects of bubble inclusion (referred to as a porosity) may occur over a wide region in a group, in a case of the defects of bubble inclusion, the threshold value of the distance between the defect regions determined to have a relevance can be increased.

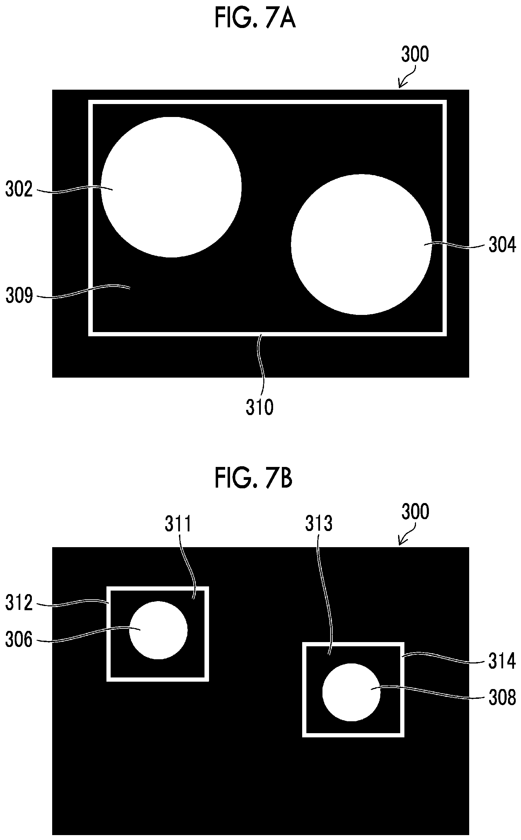

In addition, the distance between the defect regions can be a distance weighted by sizes of the defect regions. Figs. 7A and 7b are diagrams showing an example of display processing according to the embodiment of the present invention. Fig. 7A is a diagram in which determination is made that two defects have a relevance, and Fig. 7B is a diagram in which determination is made that two defects have no relevance. Fig. 7A is a diagram showing defect regions 302 and 304 indicating two circular defects having a diameter of 15 px on a segmentation image 300 in which the defect regions 302 and 304 are separated from each other by 10 px from end portions of the defect regions 302 and 304. In addition, Fig. 7B is a diagram in which defect regions 306 and 308 indicating two circular defects having a diameter of 2 px are separated from each other by 10 px from end portions of the defect regions 306 and 308 on the segmentation image 300. Even though the distance between the defect regions is the same, a ratio of the distance to the size of the defect itself is different. Therefore, it can be determined that the defect regions in Fig. 7A have a relevance. In addition, it can be determined that the defect regions in Fig. 7B have no relevance.

Returning to Fig. 6, the region decision unit 246 of the image processing unit 24 decides a target region for displaying a plurality of defect regions in an integrated display format, based on the evaluation result determined in the relevance determination step (step S18) (step S20: region decision step). The target region to be displayed in an integrated display format is a region including a plurality of defect regions determined to have a relevance in the relevance determination step (step S18). In Fig. 7A, the defect regions 302 and 304 are defect regions determined to be defects having a relevance, and a region including the defect regions 302 and 304 is decided as a target region 309. In addition, in Fig. 7B, the defect region 306 and the defect region 308 are defects determined to be defects having no relevance, and a region including the defect region 306 and a region including the defect region 308 are decided as target regions 311 and 313, respectively.

Next, the drawing unit 248 of the image processing unit 24 draws each of the target regions 309, 311, and 313 decided in the region decision step (step S20) in an integrated display format (step S22: drawing step). In Fig. 7A, the target region 309 is indicated by drawing the target region 309 with a rectangular frame 310 as a display format. In addition, in Fig. 7B, in the relevance determination step (step S18), the defect region 306 and the defect region 308 are defects determined to have no relevance, and the target regions are indicated by drawing the target regions 311 and 313 including the defect region 306 and the defect region 308 with rectangular frames 312 and 314, respectively.

In Figs. 7A and 7B, the target region is indicated as being surrounded by a rectangular frame as an integrated display format for drawing the target region, but the present invention is not limited thereto. For example, the target region can be indicated by maintaining the brightness of the target region and reducing the brightness of the periphery of the target region to perform the highlight display. In addition, the target region can be indicated by an arrow. Further, a shape of the frame is not limited to a rectangle, and may be another shape such as a circle or an ellipse. In addition, the frame may be indicated by a broken line or the like, and a line type thereof is not limited.

The control unit 12 creates a display image (refer to Figs. 7A and 7B) in which the target region is shown on the segmentation image based on the segmentation image acquired in the acquisition step (step S12), the target region decided in the region decision step (step S20), and the positional information of the rectangular frames 310, 312, and 314 drawn in the drawing step (step S22), and passes these information to the display unit 18. As a result, an inspection image in which the target region in which the relevant defects are integrated is displayed on the display unit 18.

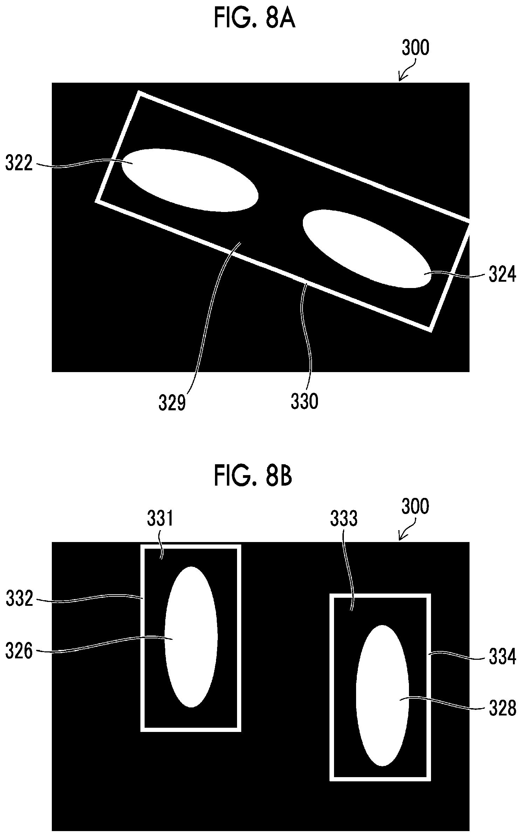

Figs. 8A and 8B are diagrams showing another example of the display processing according to the embodiment of the present invention, in which the relevance is determined by the regularity between the defect regions. Fig. 8A is a diagram in which two defects are determined to have a relevance, and Fig. 8B is a diagram in which two defects are determined to have no relevance. Fig. 8A is a diagram in which defect regions 322 and 324 indicating two elliptical defects having a major axis of 10 px and a minor axis of 3 px are continuously disposed in a major axis direction with a center distance of 8 px on the segmentation image 300. In addition, Fig. 8B is a diagram in which defect regions 326 and 328 indicating two elliptical defects having a major axis of 10 px and a minor axis of 3 px are continuously disposed on the segmentation image 300 with a center distance of 8 px, as in Fig. 8A, but the defect regions 326 and 328 are disposed to face each other in minor axes thereof. Even though the distances between the defect regions are the same, the defect regions 322 and 324 that are continuous in the major axis direction can be determined to be defects having a relevance, and the defect regions 326 and 328 that face each other in the minor axes thereof can be determined to be defects having no relevance and being separate defects.

The defect regions 322 and 324 are determined to be defects having a relevance, a region including the defect regions 322 and 324 is decided as a target region 329, and the target region 329 is indicated by a frame 330. In addition, the defect regions 326 and 328 are determined to be defects having no relevance, a region including the defect region 326 and a region including the defect region 328 are decided as target regions 331 and 333, respectively, and the target regions are indicated by a frame 332 and a frame 334, respectively.

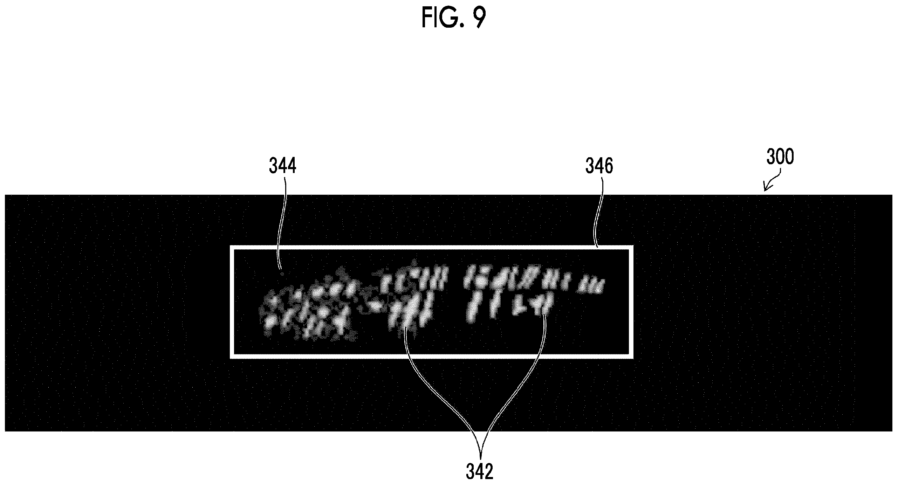

Fig. 9 is a diagram showing still another example of the display processing according to the embodiment of the present invention. The segmentation image 300 shown in Fig. 9 has a defect region 342 indicating 30 or more defects. In a plurality of the defect regions 342, the defect regions 342 face the same direction in a longitudinal axis direction and have a curved continuity in a lateral direction. Therefore, it can be determined that these defective regions 342 are a series of defects (scratches) and are defects having a relevance. Therefore, a region including the series of defect regions 342 is decided as a target region 344, and the target region 344 is indicated by a frame 346.

In addition, positional information of the defect can be used as the feature amount for determining a relevance of the defect region. In a case where a step of brightness is confirmed between the defect regions on the segmentation image, the positional information of the defect can be determined to be separate defects that are separated in a depth direction of the captured image, and can be determined to be defects having no relevance. In addition, even in a case where textures around the defect regions are different, it can be determined that the defects are generated in different regions and are separate defects, and the defects can be determined to have no relevance.

Further, in a case where the shape of the object is known in advance from a three-dimensional model of the object or the like, and it is determined that a plurality of layers of a component overlap each other in a depth direction in the vicinity of the defect from a correspondence with the positional information of the defect of the segmentation image, it can be determined that the defects are separate defects and that the defects have no relevance.

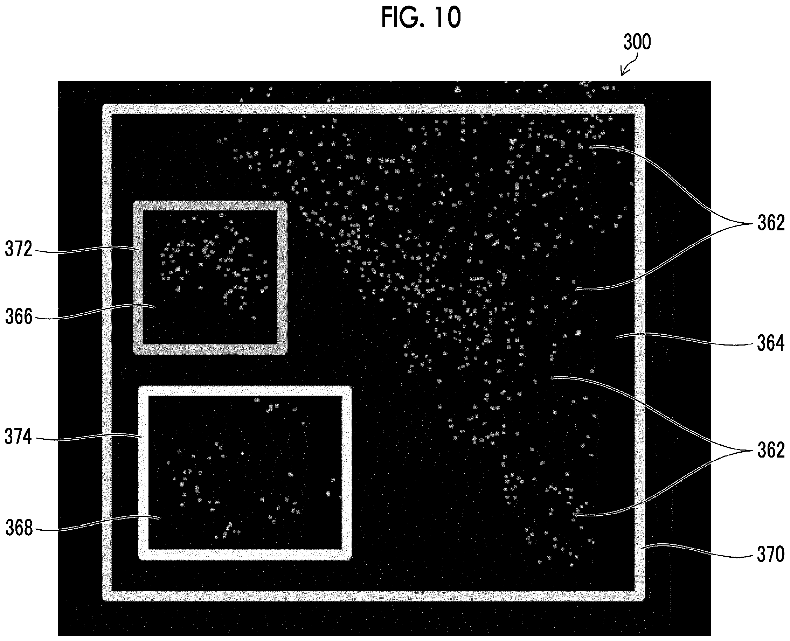

Fig. 10 is a diagram showing still another example of the display processing according to the embodiment of the present invention and showing an image in which defects of a group of bubbles (porosity) have occurred. Defect regions 362 indicating the defects of bubble inclusion may be generated over a wide region in a group. The relevance determination step (step S18) determines the defect regions 362 indicating the defects of the bubble inclusion to be defects having a relevance. The region decision step (step S20) decides a region including these defect regions 362 as a target region 364. Further, the region decision step (step S20) decides regions having a different occurrence density distribution of the defects from other regions inside the target region 364 as sub-target regions 366 and 368 in the target region 364.

In the example shown in Fig. 10, in the target region 364, a region having a high occurrence density distribution of defects is defined as a first sub-target region 366, and a region having a low occurrence density distribution of defects is defined as a second sub-target region 368.

The drawing step (step S22) draws the target region 364 with a first frame having a rectangular shape (first display format) 370, and draws the first sub-target region 366 and the second sub-target region 368 with second frames having a rectangular shape (second display formats) 372 and 374, respectively. The first display format and the second display format are not limited to the frame, and can be drawn by the highlight display or the mark as described above.

In addition, in Fig. 10, an example of a two-stage hierarchical structure having the first sub-target region and the second sub-target region in the target region has been described, but a three-stage or higher hierarchical structure further having another sub-target region in the sub-target region can also be used.

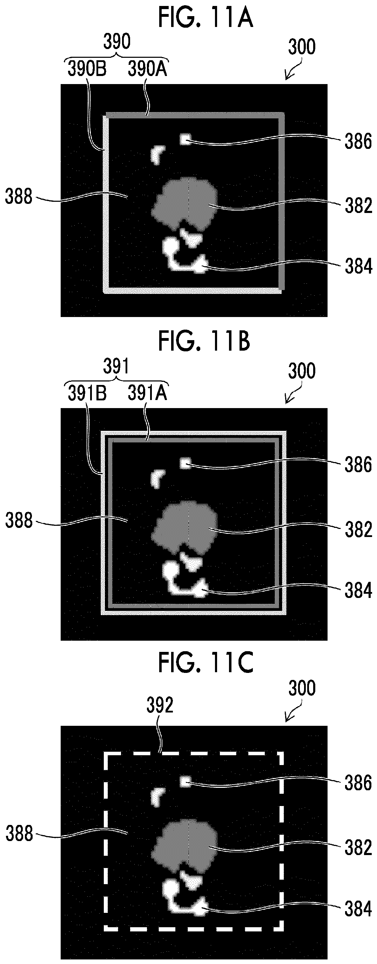

Figs. 11A to 11C are diagrams showing still another example of the display processing according to the embodiment of the present invention. Figs. 11A to 11C are diagrams showing a case where a region including defects of different types is decided as the target region.

In the segmentation image 300, a defect region 382 and defect regions 384 and 386 are distinguished from each other by different colors, and are different types of defects. In addition, the defect region 384 and the defect region 386 are defects of the same type, but the defect region 382 is present between the defect region 384 and the defect region 386. Therefore, the defect region 384 and the defect region 386 are defects having no relevance.

In such a case, in the display processing, regions including the defect regions 382, 384, and 386, respectively, are decided as target regions, and each of the regions is drawn in an individual display format, so that the target regions are displayed. However, in Figs. 11A to 11C, since the defect regions 382, 384, and 386 are close to each other, there is a concern that the defect regions overlap each other and the defects are difficult to understand in a case where the display format is drawn individually.

Therefore, in the display processing of the present embodiment, in a case where the display format is drawn to overlap, in the region decision step (step S20), the defect regions 382, 384, and 386 including defects of different types and defects having no relevance are decided as a target region 388, and in the drawing step (step S22), the target region 388 is drawn in an integrated display format.

As an example of the display format, Fig. 11A is a diagram showing a display format in which the target region 388 is displayed in a frame divided and colored by a plurality of display colors. In Fig. 11A, a frame 390 surrounding the target region 388 is displayed by a side 390A to which a first color is applied and a side 390B to which a second color is applied. The first color and the second color correspond to colors of the defect region 382 and the defect regions 384 and 386 used for distinguishing the defect types in the segmentation image 300. As a result, the type of defect can be read from the display of the frame 390.

Fig. 11B is a diagram showing a display format in which the target region 388 is displayed with a double frame 391. Also in Fig. 11B, a frame 391 surrounding the target region 388 is displayed by an inner frame 391A to which a first color is applied and an outer frame 391B to which a second color is applied. The first color and the second color correspond to colors of the defect region 382 and the defect regions 384 and 386 used for distinguishing the defect types in the segmentation image 300. As a result, the type of defect can be read from the display of the frame 389.

Fig. 11C is a diagram showing a display format in which the target region 388 is displayed with a frame 392 of a broken line. In Fig. 11C, the type of defect cannot be read by the frame 392, but it can be read that defects of different types are included by using a broken line.

According to the present embodiment, the detailed shape and distribution of the detection target can be confirmed from a discrimination result between the detailed detection target for each pixel by the segmentation and other targets, and information necessary for the inspection can be extracted. By determining the relevance between the inspection targets, a plurality of inspection targets can be grouped and drawn in an integrated display format, the inspection target that the inspector should pay particular attention to is clarified, and an inspection efficiency can be improved.

In the embodiment described above, the detection target is described as the defect, but the detection target is not limited to the defect. For example, a minute scratch that meets a product standard but has a variation can be used as a detection target.

In addition, the present invention is not limited to the application of the inspection and can also be used for applications other than the inspection, such as analysis of objects, classification of products, and evaluation.

The present invention can also be realized as a program (display processing program) for causing a computer to realize the above processing, or a non-transitory recording medium or a program product storing such a program. By applying such a display processing program to the computer, it is possible to make computing means, recording means, and the like of the computer function as an acquisition function, an extraction function, a measurement function, a relevance determination function, a region decision function, and a drawing function of the display processing program.

### Explanation of References

10: defect display processing device
12: control unit
14: operation unit
16: input/output interface (I/F)
18: display unit
20: buffer memory
22: image recognition unit
24: image processing unit
26: recording unit
100: imaging system
102: imaging control unit
104: imaging operation unit
106: image recording unit
108: imaging apparatus
110: radiation source
112: radiation source
114: imaging room
200: product database (product DB)
240: extraction unit
242: measurement unit
244: relevance determination unit
246: region decision unit
248: drawing unit
300: segmentation image
302: defect region
304: defect region
306: defect region
308: defect region
309: target region
310: frame
311: target region
312: frame
313: target region
314: frame
322: defect region
324: defect region
326: defect region
328: defect region
329: target region
330: frame
331: target region
332: frame
333: target region
334: frame
342: defect region
344: target region
346: frame
362: defect region
364: target region
366: sub-target region (first sub-target region)
368: sub-target region (second sub-target region)
370: first frame
372: second frame
374: second frame
382: defect region
384: defect region
386: defect region
388: target region
390: frame
390A: side
390B: side
391: frame
391A: inner frame
391B: outer frame
392: frame
D 100: object imaging data
D200: product data
OBJ: object
NW: network

## Claims

1. A display processing device comprising:
an acquisition unit that discriminates a detection target and other targets of an object for each pixel of a captured image obtained by imaging the object based on the captured image, and acquires a segmentation result;
an extraction unit that extracts a region of the detection target from the segmentation result;
a measurement unit that measures a feature amount for determining a relevance between a plurality of regions of the detection targets in a case where a plurality of non-continuous regions of the detection targets are extracted;
a relevance determination unit that determines the relevance between the plurality of regions of the detection targets based on the feature amount;
a region decision unit that decides a target region to be displayed in an integrated display format among the plurality of regions of the detection targets based on an evaluation result determined by the relevance determination unit; and
a drawing unit that draws the target region in the display format.

2. The display processing device according to claim 1, further comprising a display control unit that passes information necessary for displaying the target region to a display unit to display the target region.

3. The display processing device according to claim 1 or 2,
wherein the captured image is a transmission image captured by transmitting radiation through the object.

4. The display processing device according to any one of claims 1 to 3,
wherein the display format is at least one of a frame surrounding the target region, highlight display between the target region and other regions, or a mark indicating the target region.

5. The display processing device according to any one of claims 1 to 4,
wherein the detection target is a defect.

6. The display processing device according to claim 5,
wherein the relevance determination unit determines a relevance for regions of detection targets having the same type of defects.

7. The display processing device according to claim 6,
wherein the feature amount is a distance between the regions of the detection targets.

8. The display processing device according to claim 7,
wherein the relevance determination unit has a threshold value of the distance determined from characteristics of the object, a past detection history, a pass/fail criterion of the detection target, and a type of the detection target, and determines the relevance from the threshold value and the feature amount measured by the measurement unit.

9. The display processing device according to claim 6,
wherein the feature amount is positional information of the detection target.

10. The display processing device according to claim 6,
wherein the feature amount is a regularity of the region of the detection target.

11. The display processing device according to any one of claims 6 to 10,
wherein the region decision unit decides the target region and a sub-target region in the target region, which has a different occurrence density distribution of the detection target from other regions inside the target region, and
the drawing unit draws the target region in a first display format and draws the sub-target region in a second display format.

12. The display processing device according to claim 5,
wherein the target region includes defects of different types, and
the drawing unit adds information indicating that the defects of different types are included in the target region.

13. The display processing device according to claim 12,
wherein the information is given by at least one of a display color, a line type, or a mark of a frame surrounding the target region.

14. A display processing method comprising:
an acquisition step of discriminating a detection target and other targets of an object for each pixel of a captured image obtained by imaging the object based on the captured image, and acquiring a segmentation result;
an extraction step of extracting a region of the detection target from the segmentation result;
a measurement step of measuring a feature amount for determining a relevance between a plurality of regions of the detection targets in a case where a plurality of non-continuous regions of the detection targets are extracted;
a relevance determination step of determining the relevance between the plurality of regions of the detection targets based on the feature amount;
a region decision step of deciding a target region to be displayed in an integrated display format among the plurality of regions of the detection targets based on an evaluation result determined in the relevance determination step; and
a drawing step of drawing the target region in the display format.

15. A display processing method comprising:
an acquisition step of acquiring information on a region of a detection target included in a segmentation result in which a detection target for each pixel of an object and other targets are discriminated from each other;
a measurement step of measuring a feature amount for determining a relevance between a plurality of regions of the detection targets in a case where there are a plurality of non-continuous regions of the detection targets;
a relevance determination step of determining the relevance between the plurality of regions of the detection targets based on the feature amount; and
a region decision step of deciding a target region to be displayed in an integrated display format among the plurality of regions of the detection targets based on an evaluation result determined in the relevance determination step.

16. A display processing program for causing a computer to implement:
an acquisition function of discriminating a detection target and other targets of an object for each pixel of a captured image obtained by imaging the object based on the captured image, and acquiring a segmentation result;
an extraction function of extracting a region of the detection target from the segmentation result;
a measurement function of measuring a feature amount for determining a relevance between a plurality of regions of the detection targets in a case where a plurality of non-continuous regions of the detection targets are extracted;
a relevance determination function of determining the relevance between the plurality of regions of the detection targets based on the feature amount;
a region decision function of deciding a target region to be displayed in an integrated display format among the plurality of regions of the detection targets based on an evaluation result determined by the relevance determination function; and
a drawing function of drawing the target region in the display format.

17. A non-transitory computer-readable recording medium having the program according to claim 16 recorded thereon.

## Amended claims

### Amended claims in accordance with Rule 137(2) EPC.

1. A display processing device comprising:
an acquisition unit that discriminates a detection target and other targets of an object for each pixel of a captured image obtained by imaging the object based on the captured image, and acquires a segmentation result;
an extraction unit that extracts a region of the detection target from the segmentation result;
a measurement unit that measures a feature amount for determining a relevance between a plurality of regions of the detection targets in a case where a plurality of non-continuous regions of the detection targets are extracted;
a relevance determination unit that determines the relevance between the plurality of regions of the detection targets based on the feature amount;
a region decision unit that decides a target region to be displayed in an integrated display format among the plurality of regions of the detection targets based on an evaluation result determined by the relevance determination unit; and
a drawing unit that draws the target region in the display format.

2. The display processing device according to claim 1, further comprising a display control unit that passes information necessary for displaying the target region to a display unit to display the target region.

3. The display processing device according to claim 1 or 2,
wherein the captured image is a transmission image captured by transmitting radiation through the object.

4. The display processing device according to any one of claims 1 to 3,
wherein the display format is at least one of a frame surrounding the target region, highlight display between the target region and other regions, or a mark indicating the target region.

5. The display processing device according to any one of claims 1 to 4,
wherein the detection target is a defect.

6. The display processing device according to claim 5,
wherein the relevance determination unit determines a relevance for regions of detection targets having the same type of defects.

7. The display processing device according to claim 6,
wherein the feature amount is a distance between the regions of the detection targets.

8. The display processing device according to claim 7,
wherein the relevance determination unit has a threshold value of the distance determined from characteristics of the object, a past detection history, a pass/fail criterion of the detection target, and a type of the detection target, and determines the relevance from the threshold value and the feature amount measured by the measurement unit.

9. The display processing device according to claim 6,
wherein the feature amount is positional information of the detection target.

10. The display processing device according to claim 6,
wherein the feature amount is a regularity of the region of the detection target.

11. The display processing device according to any one of claims 6 to 10,
wherein the region decision unit decides the target region and a sub-target region in the target region, which has a different occurrence density distribution of the detection target from other regions inside the target region, and
the drawing unit draws the target region in a first display format and draws the sub-target region in a second display format.

12. The display processing device according to claim 5,
wherein the target region includes defects of different types, and
the drawing unit adds information indicating that the defects of different types are included in the target region.

13. The display processing device according to claim 12,
wherein the information is given by at least one of a display color, a line type, or a mark of a frame surrounding the target region.

14. A display processing method comprising:
an acquisition step of discriminating a detection target and other targets of an object for each pixel of a captured image obtained by imaging the object based on the captured image, and acquiring a segmentation result;
an extraction step of extracting a region of the detection target from the segmentation result;
a measurement step of measuring a feature amount for determining a relevance between a plurality of regions of the detection targets in a case where a plurality of non-continuous regions of the detection targets are extracted;
a relevance determination step of determining the relevance between the plurality of regions of the detection targets based on the feature amount;
a region decision step of deciding a target region to be displayed in an integrated display format among the plurality of regions of the detection targets based on an evaluation result determined in the relevance determination step; and
a drawing step of drawing the target region in the display format.

15. A display processing method comprising:
an acquisition step of acquiring information on a region of a detection target included in a segmentation result in which a detection target for each pixel of an object and other targets are discriminated from each other;
a measurement step of measuring a feature amount for determining a relevance between a plurality of regions of the detection targets in a case where there are a plurality of non-continuous regions of the detection targets;
a relevance determination step of determining the relevance between the plurality of regions of the detection targets based on the feature amount; and
a region decision step of deciding a target region to be displayed in an integrated display format among the plurality of regions of the detection targets based on an evaluation result determined in the relevance determination step.

16. A display processing program for causing a computer to implement:
an acquisition function of discriminating a detection target and other targets of an object for each pixel of a captured image obtained by imaging the object based on the captured image, and acquiring a segmentation result;
an extraction function of extracting a region of the detection target from the segmentation result;
a measurement function of measuring a feature amount for determining a relevance between a plurality of regions of the detection targets in a case where a plurality of non-continuous regions of the detection targets are extracted;
a relevance determination function of determining the relevance between the plurality of regions of the detection targets based on the feature amount;
a region decision function of deciding a target region to be displayed in an integrated display format among the plurality of regions of the detection targets based on an evaluation result determined by the relevance determination function; and
a drawing function of drawing the target region in the display format.

17. A non-transitory computer-readable recording medium having the program according to claim 16 recorded thereon.

18. (Added) The display processing device according to any one of claims 1 to 13,
wherein the target region to be displayed in the integrated display format decided by the region decision unit includes target regions extracted as ones of at least two types different from each other.

19. (Added) The display processing device according to claim 7,
wherein the relevance determination unit has a threshold value of the distance determined from at least one of: characteristics of the object; a past detection history; a pass/fail criterion of the detection target; and a type of the detection target, and determines the relevance from the threshold value and the feature amount measured by the measurement unit.

Statement under Art. 19.1 PCT
Claim 18 newly recites an invention based on matters described in paragraph [0072] in the specification as filed.

Claim 19 newly recites an invention based on matters described in paragraph [0046] in the specification as filed.
